# EUROPEAN PATENT SPECIFICATION

(11) **EP 3 711 848 B1**
(45) Date of publication and mention of the grant of the patent: **20.12.2023**
(21) Application number: 19164056.4
(22) Date of filing: 20.03.2019
(51) Int. Cl.: B01D 67/00, B01J 13/02, B01D 71/74

(54) **METHOD FOR PREPARATION OF A BIOACTIVE LIPID MEMBRANE AND A FUNCTIONALIZED LIPID BI-LAYER MEMBRANE PREPARED WITH SAID METHOD**
VERFAHREN ZUR HERSTELLUNG EINER BIOAKTIVEN LIPIDMEMBRAN UND MIT BESAGTEM VERFAHREN HERGESTELLTE, FUNKTIONALISIERTE, ZWEISCHICHTIGE LIPIDMEMBRAN
PROCÉDÉ DE PRÉPARATION D'UNE MEMBRANE LIPIDIQUE BIOACTIVE ET MEMBRANE BICOUCHE LIPIDIQUE FONCTIONNALISÉE PRÉPARÉE SELON LEDIT PROCÉDÉ

(43) Date of publication of application: 23.09.2020
(73) Proprietor: Wilm, Matthias, 64291 Darmstadt (DE)
(72) Inventor: Wilm, Matthias, 64291 Darmstadt (DE)
(74) Representative: DTS Patent- und Rechtsanwälte Schnekenbühl und Partner mbB

(56) References cited:
- EP-A1- 1 588 756
- WO-A1-2015/061510
- WO-A2-2004/103510
- US-A1- 2011 084 026
- US-A1- 2018 196 040
- Matthias Wilm: "Evidence for Membrane Complex Assembly in Nanoelectrospray Generated Lipid Bilayers", bioRxiv, 6 June 2019 (2019-06-06), XP055600166, DOI: 10.1101/661231 Retrieved from the Internet: URL:https://www.biorxiv.org/content/biorxi v/early/2019/06/06/661231.full.pdf [retrieved on 2019-06-27]
- Matthias Wilm: "Synthesis of Extended, Self-Assembled Biological Membranes containing Membrane Proteins from Gas Phase", bioRxiv, 6 June 2019 (2019-06-06), pages 1-12, XP055600170, DOI: 10.1101/661215 Retrieved from the Internet: URL:https://www.biorxiv.org/content/biorxi v/early/2019/06/06/661215.full.pdf [retrieved on 2019-06-27]
- WEN LI ET AL: "Microfluidic fabrication of microparticles for biomedical applications", CHEMICAL SOCIETY REVIEWS, vol. 47, no. 15, 1 January 2018 (2018-01-01), pages 5646-5683, XP055571481, UK ISSN: 0306-0012, DOI: 10.1039/C7CS00263G
- CHRISTINA SIONTOROU ET AL: "Artificial Lipid Membranes: Past, Present, and Future", MEMBRANES, vol. 7, no. 3, 26 July 2017 (2017-07-26), page 38, XP055600870, CH ISSN: 2077-0375, DOI: 10.3390/membranes7030038

## Description

The present invention relates to a method for preparation a bioactive lipid membrane.

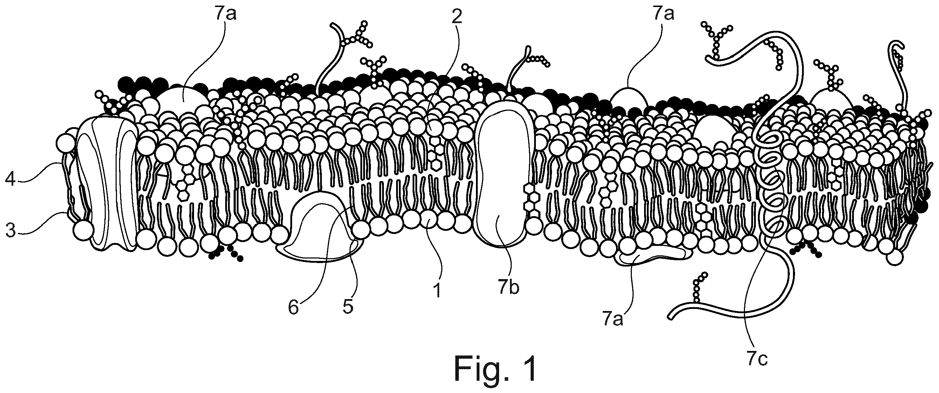

A general example of a known bioactive lipid membrane is shown in Fig. 1. The lipid membrane shown in Fig. 1 comprises a plurality of lipid molecules 1, 2 arranged in a so-called bi-layer. The lipid molecules arranged in the first layer 3 which is the lower layer in Fig. 1 are identified with reference number 1 and the lipid molecules of the second layer 4 are identified with reference number 2. Each of the lipid molecules 1, 2 has a hydrophilic head portion 5 and a hydrophobic tail portion 6. The hydrophobic tail portions 6 of neighboring lipid molecules 1, 2 adhere to each other via van-der-Waals forces such that the first and second layers 3, 4 are generated to form a bilayer membrane.

In the example shown in Fig. 1 embedded in the bi-layer membrane, there are proteins 7a, 7b, 7c. These proteins may be embedded proteins 7a which are embedded and not reaching through the bi-layer membrane, or channel proteins 7b which form a channel in the bi-layer membrane. The protein which is identified with reference number 7c is a protein helix.

Such membranes commonly serve as cell walls and define the outer circumferential surface of a cell.

By the proteins 7, 7a, 7b, 7c, the bi-layer membrane is functionalized and a so-called bioactive membrane is formed.

Such membranes are nowadays generated in bioreactors which use entire cells. Therefore, the final product may have a variable composition or the production rate can variate. It might be difficult to remove contaminants which even in trace amounts can cause allergic reactions.

Such membranes which define the wall of a cell may also be used in cytostatic drugs which can have covalently conjugated antibodies which can react with a target molecule in the cell system of interest.

Further relevant prior art is described in Matthias Wilm: "Evidence for Membrane Complex Assembly in Nanoelectrospray Generated Lipid Bilayers" bioRxiv, 6 June 2019, Matthias Wilm: "Synthesis of Extended, Self-Assembled Biological Membranes containing Membrane Proteins from Gas Phase" bioRxiv, 6 June 2019, pages 1-12, US 2011/084026 A1, US 2018/196040 A1, WO 2015/061510 A1, and CHRISTINA SIONTOROU ET AL: "Artificial Lipid Membranes: Past, Present, and Future", Membranes, vol. 7, no. 3, 26 July 2017.

According to the present invention, it shall be provided a simplified method which can provide well-defined bioactive lipid membranes, which in particular have large dimensions and which are flat.

This problem is solved by the method defined in claim 1.

In the inventive method, there is a step which is identified in the following as step a), in which a first lipid molecule is applied to a liquid surface by electro-spraying. In particular, such an amount of first lipid molecule is applied to the liquid surface by the electro-spraying in step a), so that about one single first lipid layer is generated, which later forms one of the lipid layers of the bi-layer membrane. It is preferable, that no or almost no second layer of the lipid is formed on top of the first lipid layer

After the first lipid molecules are applied to the liquid surface to form the first lipid layer, there is applied a mixture of second lipid molecules and protein molecules also via electro-spraying such that it is formed a lipid bi-layer membrane having a protein molecule integrated in this membrane.

The proteins may be embedded within the formed bi-layer membrane, after for example storing the reactants, after steps a) and b) are executed, at room temperature. The proteins depending on the reaction conditions and structure can be embedded within the formed bi-layer membrane only on one side of the membrane i.e. within one of the first and second lipid layers, and/or may be embedded within the formed bi-layer membrane as through-going proteins which form a channel structure through both lipid layers. The formation of the through-going proteins is beneficial for providing a membrane structure, through which further molecules can diffuse through the channels formed therein.

Namely, in step b), the mixture of second lipid molecules and protein molecules is applied in such a way that the functionalized lipid layer membrane having protein molecules integrated therein, is generated.

There is applied approximately the same amount of molecules which is also applied to form a first lipid layer such that a functionalized lipid layer membrane can be formed.

After the first lipid molecules and the second molecules, including the proteins are applied to the surface, there is applied a so-called second hydrophilic layer on top of the lipid bi-layer membrane which has been formed in step b). This step is identified in the following as step c).

Although, the functionalized lipid layer membrane may not yet have been formed in a wellstructured way direct after steps a) and b), to omit the determination "to be formed functionalized lipid layer membrane", the term functionalized lipid layer membrane is also used in this stage of the method. The readily formed functionalized lipid layer membrane is e.g. formed after step c) and after storing a certain period, which allows the rearrangement and healing of the molecules, which are added to the liquid surface.

It has been observed the first time that a well-defined and laterally extended bioactive lipid bilayer membrane can be formed, if a topping layer being a hydrophilic layer is applied in step c). Due to the hydrophilic environment, at least at the side which may be otherwise in contact with the atmosphere, a proper arrangement of the proteins in the membrane and a flat membrane geometry may be achieved.

An electro-spraying is usually executed with an electro-spray apparatus that employs electricity to disperse a liquid and a fine aerosol resulting from this process. For example, a high voltage is applied to a liquid supplied through an emitter which may be a glass or metallic capillary.

The liquid reaching the emitter forms a so-called Taylor-cone which emits a liquid jet through its apex. With the technique of electro-spraying, well-defined droplets of volatile solvent in which the first liquid molecules and/or the second liquid molecules and/or the protein molecules and/or the molecules forming the second hydrophilic layer may be incorporated.

With this electro-spraying method, a well-defined amount of the respective molecules can be applied in a layered fashion to the liquid surface of a base liquid which may be for example stored in a container.

It may be the case that in addition to the aforementioned step a), wherein the first lipid molecules are applied to form the first lipid layer before step a), a first hydrophilic layer is applied to the liquid surface of the base liquid. This step is identified in the following as step ii).

When this further step ii) is carried out, the final lipid bi-layer membrane having the protein molecules incorporated therein, is sandwiched between two hydrophilic layers, namely between the first hydrophilic layer, which is located between the liquid surface of the base liquid and the first lipid layer of the bi-layer membrane and the second hydrophilic layer, which is located between the second lipid layer of the bi-layer membrane and the atmosphere.

The provision of the sandwich configuration with the first and second hydrophilic layers improves the correct and laterally extended formation of the bioactive bi-layer membrane.

The membrane is provided as a thin layer and surrounded on both sides by the respective hydrophilic layer. The hydrophilic environment on both sides of the membrane allows the membrane proteins to be properly incorporated into the membrane. The vast majority of the membrane proteins may extend across the entire membrane. In their folded state, they have hydrophilic components on both sides of the membrane.

One of the observations made by the inventors was that a very good incorporation of the proteins into the membrane can be achieved, when both sides of a protein which extend through the membrane are in hydrophilic contact with the respective hydrophilic layers.

For an easy formation of an extended and flat membrane, the thickness of the first and second hydrophilic layers may be in the range between 30 to 600 nm. Further preferable thicknesses of each of the first and second hydrophilic layers are 40, 200, 400 nm. Said values may constitute an upper and/or lower border of a thickness range. As hydrophilic layer, a glycerol layer consisting of glycerol or containing glycerol may be provided. However, the hydrophilic layer is not delimited to contain glycerol and can contain any other hydrophilic molecules or molecule mixture.

It has been seen as advantageous that the first and/or the second hydrophilic layers are also applied by means of electro-spraying. In the electro-spraying process, for example, a hydrophilic molecule dissolved in a volatile solvent droplet is deposited on the respective liquid surface.

For further improving the method of preparation a bioactive lipid membrane, it has been seen as further advantageous that before the first hydrophilic layer is applied to the liquid surface, a lipid double layer membrane is applied by an electro-spraying method to the liquid surface of the base liquid. This means via an electro-spraying procedure, similar to the aforementioned electro-spraying procedure for the first lipid layer and the application of the mixture of the second lipid molecules and the protein molecules, there may be applied further third lipid molecules in such an amount that only one lipid double layer constituting a lipid double layer membrane is generated on the surface of the base liquid. This lipid double layer membrane is discriminated from the inventive functionalized lipid bi-layer membrane in that it has no protein integrated therein.

For terminology reasons, to better identify the different membranes, the inventive functionalized lipid bi-layer membrane is named "bi-layer" membrane, while the common base double layer membrane is named "double layer" membrane. However, the words "bi" and "double" are used synonymously.

The lipid molecules or molecule mixture constituting the first lipid layer of the functionalized lipid bi-layer membrane, the second lipid layer of the functionalized lipid bi-layer membrane, as well as the double layer of the lipid double layer membrane may be the same molecules or molecule mixture. One may use a single type of molecules such as a bi-polar lipid, such as phosphatidylcholine, or a mixture of different lipid molecules may be used. It was e.g. beneficial, when as lipid a mixture of phosphatidylcholine with cholesterol was used.

Generally, for generating the lipid double layer membrane between the base liquid and the first hydrophilic layer, a different lipid composition may be used as for the functionalized lipid bi-layer membrane of the invention which is generated in the aforementioned step b).

It is preferable that the electro-spraying is carried out such that a droplet is generated by the electro-spraying, which droplet contains the respective molecule which is applied in the specific layer. The droplet may contain less than four molecules, wherein the remainder of the droplet consists of volatile solvent and inevitable impurities. It is in particular preferable that just three, just two or just one molecule are contained in the droplet generated by the electro-spraying. The aforementioned numbers are average numbers, averaging the molecule in a plurality of droplets. With such a configuration, it can be achieved that the application of the different layers can be executed in a very precise way.

The type of electro-spraying is called nano-electro-spraying. For such nano-electro-spraying, there may be used a flow rate in the emitter between 20 nL/min to 100 nL/min. The emitted solution, wherein the molecules/substance (lipid species, protein species, hydrophilic species) are/is dissolved in the volatile solvent may have/has a molecule/substance concentration between 0.05 pmol/µl and 100 pmol/µl. Further preferable concentrations are 1 pmol/µl, 10 pmol/pl, 50 pmol/µl. Said values may constitute an upper and/or lower border of the aforementioned range. When e.g. the solution of a concentration of 1 pmol/µl each droplet carries an average of only one molecule of the substrate, the remainder of the droplet is the volatile solvent and inevitable impurities.

As volatile solvent, ethanol may be used.

With such a configuration, very small droplets are generated which contain only a very small amount of molecules such that a precise adsorption on the surface can be provided.

It is preferable that the electro-spraying is carried out such that the volatile solvent contained in the droplet is substantially evaporated when the molecules which are applied to the surface reach the surface on which they are deposited. With such a process, it can be assured that there are applied very tiny amounts of the specific molecules such that a single first layer, for example, of the first lipid layer and the second lipid layer, are formed. When the molecule reaches the surface, there is almost no volatile solvent contained and, therefore, a good arrangement of the molecules on the surface can be assured.

It has been shown that it is advantageous that the distance between a nozzle/an emitter of an electro-spraying apparatus with which electro-spraying is carried out and the surface on which the molecule is deposited is between 1 and 5 cm. Further preferable distances are 2cm, 3cm, 4cm. Said values may constitute an upper and/or lower border of the aforementioned range.

After the respective second hydrophilic layer has been applied in the aforementioned step c), it is beneficial to wait and store the generated sample in a time frame between 1 and 10 days or more at room temperature. The preferred storage time may be dependent on the respective components which are used for generating the functionalized lipid bilayer membrane.

If e.g. the used protein is to be dissolved in the presence of a detergent, which is outlined below in detail, the time frame may be between 4 and 10 days. Further preferable durations are 5, 7, 8 days. Said durations may constitute an upper and/or lower border of the aforementioned range.

If e.g. the used proteins are water soluble and if it is thus not necessary to add a detergent or no detergent is present in the mixture in step b), the time frame may be between 1 and 3 days. Further preferable durations are 2, 2.5 days. Said durations may constitute an upper and/or lower border of the aforementioned range.

If there is not at all any protein contained in the double layer membrane, and thus e.g. in the case, it is generated in the aforementioned step i) the lipid double layer membrane, it shall be waited for a duration between one minute and 24 h, which is equal to one day. Further preferable durations are 30 minutes, 4 h, 8 h. Said durations may constitute an upper and/or lower border of the aforementioned range.

During the aforementioned time frames, the respective layers can be formed in a well-defined e.g. flat and well-ordered way.

Many of the used proteins are soluble in water. As long as the term water soluble protein is used herein it is to be noted, that the method according to which said proteins are embedded in the membrane is e.g. as follows. A non-covalent protein complex forms a ring, which inserts into the membrane to e.g. form a pore or another arrangement. Although the proteins themselves are not water soluble in a narrow sense, some types of proteins can be dissolved in water or an aqueous solution as where they are folded together, to e.g. form the respective rings, which are dissolved in water or an aqueous solution, at least as a colloids.

For example, so called globular proteins are somewhat water-soluble as they are forming colloids in water, unlike the classical fibrous or classical membrane proteins. There are multiple fold classes of globular proteins, since there are many different architectures that can fold into a roughly spherical shape.

In some cases, there may be used a protein for generating the functionalized lipid layer membrane which require the presence of a detergent to be soluble in water. Said proteins are identified as non-water soluble proteins to make differentiation from the aforementioned water soluble proteins.

In this case, it has been shown that it is preferable that a detergent is also contained in the mixture of the second liquid molecules and the protein molecules which are applied in step b) by electro-spraying. The detergent present in spraying step b) prevents the proteins from denaturizing on the surface when they are absorbed on the surface.

When such a detergent is added in the mixture applied in step b), it is further preferable that the base liquid on which the different layers are set up, contains a detergent-absorbing material.

Therefore, in a step which is later defined as step iii), there may be added a detergent-absorbing material to the base liquid. Such a detergent-absorbing material may be a so-called buffer coordinated SM2-Biobeads from the company Biorad. The SM2-Biobeads, for example sink to the bottom of the container such that the amount of Biobeads which may be used are between 10 and 20 particles per container, wherein the container may have a cylindrical configuration, in particular, a circular cross-section having a diameter of 3 cm and a height of 10 cm. However, bigger or smaller sized containers may also be used, as long as it is possible to generate an extended and flat functionalized lipid bilayer membrane.

With the aforementioned method step, there may be generated the functionalized liquid bi-layer membrane such that it has a surface area of more than 7 cm. If the produced bi-layer membrane is circular, the diameter is at least 3 cm.

According to the present invention, there is further provided a functionalized lipid bi-layer membrane generated by the aforementioned method steps.

In particular, there may be provided a functionalized lipid bi-layer membrane having protein molecules integrated therein, which functionalized lipid bi-layer layer membrane is generated by an electro-spraying wherein a droplet generated by the electro-spraying containing the respective molecule which forms the functionalized lipid bi-layer membrane contains less than four molecules, wherein the remainder is volatile solvent and inevitable impurities.

In order to provide a functionalized lipid bi-layer membrane in which the proteins are distributed or arranged in a specific way, e.g. many or all of the proteins are aligned and directed in the same direction or a predetermined direction, there may be additionally provided an electric and/or magnetic field in which the assembly e.g. the container is stored, for minutes, hour or days.

The present inventors found for the first time that it is possible to incorporate, by one or several of the afore-mentioned steps, proteins into a lipid bi-layer to generate the inventive functionalized lipid bi-layer membrane, which is functionalized with the proteins.

Once a full lipid bi-layer has been formed, no protein goes easily into it, as such lipid bi-layer is like a wall. For example, the aforementioned lipid double layer membrane, which may be formed in step i), cannot be functionalized with proteins, as the double layer is completely formed, therefore at least in step b) the mixture of the second lipid molecules together with the protein molecules, is applied, wherein in step a) just one lipid layer is formed, or at least the bi-layer has not been completely formed.

A non-functionalized lipid double layer membrane is like a wall and that is precisely its physiological function, to separate cellular compartments safely from each other.

The present inventors generated about a lipid mono-layer, e.g. formed in step a), which does not exist in a native environment, because it has one large hydrophilic and a large hydrophobic site. Such a lipid mono-layer can only exist on an interface between a hydrophilic environment such as water, and a hydrophobic environment such as air. Such a lipid mono-layer offers a large surface area on which the mixture of proteins and lipids applied in step b) can arrange themselves to form a large area membrane.

Further preferred embodiments of the invention shall be explained with reference to the Figures and the subsequent experiments which were carried out.

Herein,
- Fig. 1: shows a prior art functionalized lipid bi-layer membrane having protein molecules incorporated therein;
- Fig. 2: shows a general set-up of an electro-spraying apparatus;
- Fig. 3: shows a sketch of the schematic constitution of the deposition set-up in accordance with the present invention;
- Fig. 4.1 to 4.4: show a specific sequence of generating a functionalized lipid bi-layer membrane having protein molecules incorporated therein in accordance with the present invention.

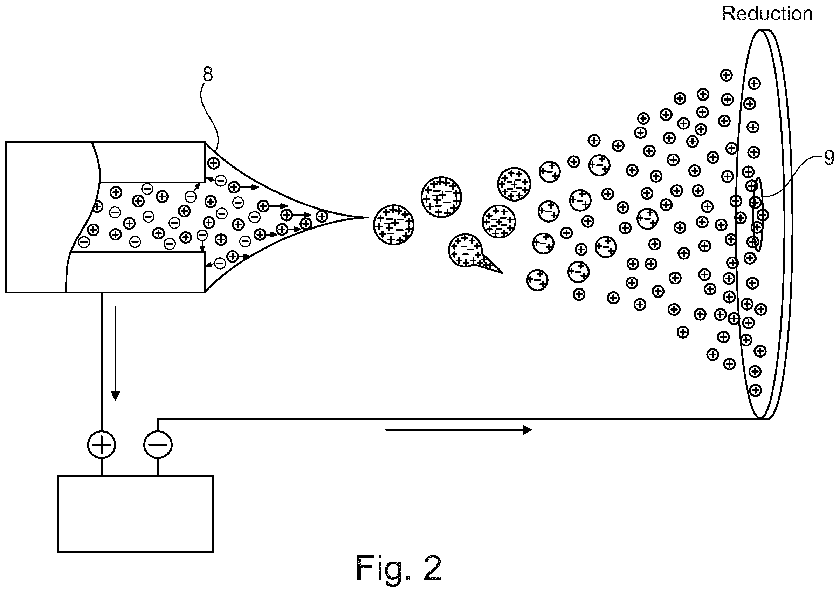

In Fig. 2, there is shown on the left-hand side an emitter 8 being a metallic or glass capillary with an opening on the front side from which a liquid may be dispensed. Between a pinhole aperture 9 and the emitter 8, there is applied a voltage such that there are generated droplets of volatile solvent in which specific molecules are dissolved. These molecules may be the molecules which are used for generating the respective lipid double layer membrane, the first hydrophilic layer, the first lipid layer of the functionalized lipid bi-layer membrane having protein molecules incorporated therein, the mixture of the second lipid molecules and the protein molecules which are applied in the subsequently outlined step b), or the hydrophilic molecules which generate the second hydrophilic layer on top of the inventive functionalized lipid bi-layer membrane.

Depending on the flow rate through the emitter 8 and the applied voltage, there may be generated droplets having a very small size, wherein only approximately several or only one molecule is contained within one droplet, wherein the remainder is a volatile solvent and inevitable impurities.

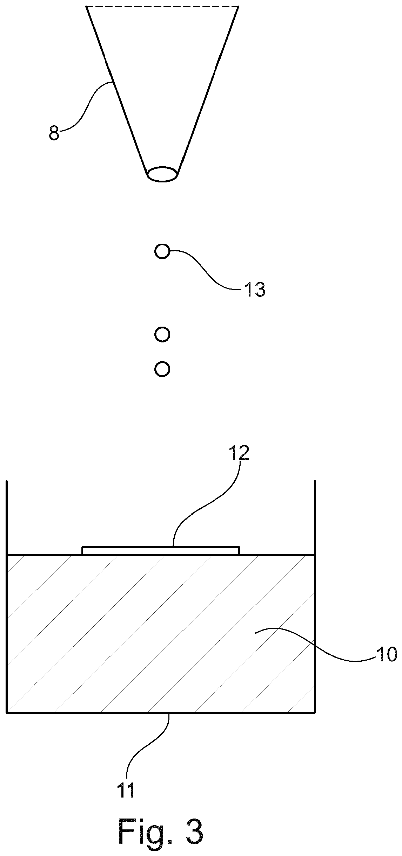

In Fig. 3, there is shown a specific constitution, wherein the emitter 8 is focused to a liquid surface of a base liquid 10 which is contained in a container 11, wherein it is schematically shown that a layer 12 is generated by the molecules contained in the droplets 13 generated by the electrospray apparatus.

With such a setup, the inventive functionalized lipid bi-layer membrane having the protein incorporated therein may be generated.

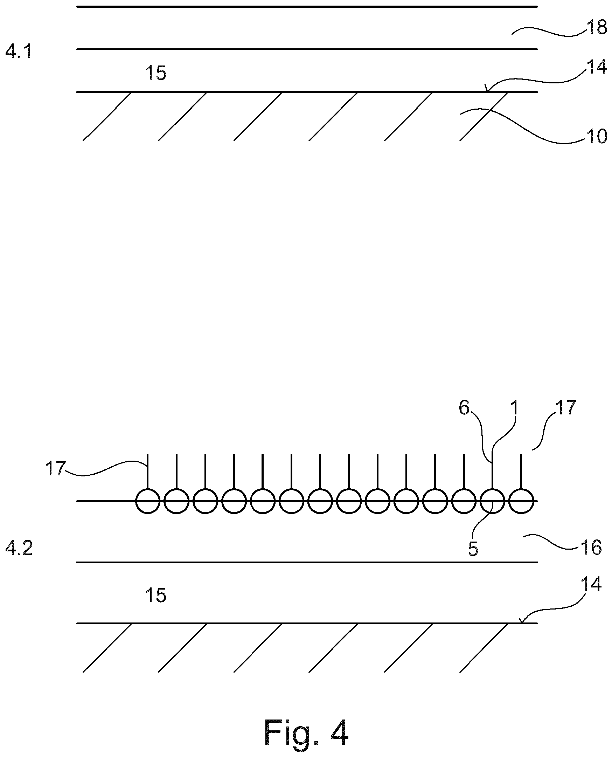

This is schematically shown in Figs. 4.1 to 4.4. However, these specific method steps do not delimit the invention but the scope of protection is defined by the claims. Therefore, no further features which are not contained in claim 1 are essential for the invention. The invention as such may also be constituted by any of the method steps a), b), c) in claim 1 alone, and/or in combination with any of the features in the dependent claims.

In Fig. 4.1, there is shown at the lower side, the base liquid 10. The base liquid surface is identified with reference sign 14. The layer identified with reference sign 15 is a lipid double layer membrane which may be formed by means of electro-spraying of a specific amount of a lipid or a mixture of lipids onto the base liquid surface 14. Also any other method for forming such a lipid double layer membrane may be selected. This lipid double layer membrane is discriminated from the inventive functionalized lipid bi-layer membrane which is described later in that it has no protein integrated therein. However, it may also be the case that a protein may be incorporated therein.

For terminology reasons only, to better identify the different membranes, the inventive functionalized lipid bi-layer membrane is named "bi-layer" membrane, while the common base double layer membrane 15 is named "double layer" membrane. However, the words "bi" and "double" are used synonymously.

The concentration of the solution used for electro-spraying for generating the lipid double layer membrane is e.g. chosen such that, for example, only several molecules are contained in one droplet. The droplet 13 may contain less than four molecules, wherein the remainder of the droplet is volatile solvent and inevitable impurities. It is in particular preferable that just three, just two or just one molecule are contained in the droplet generated by the electro-spraying. The aforementioned numbers are average numbers, averaging the molecule in a plurality of droplets. With such a configuration, it can be achieved that the application of the different layers can be executed in a very precise way.

Also the solution used for electro-spraying any of the layers which are later described may have such a concentration as it is described above for the lipids forming the lipid double layer membrane.

Such an amount of lipids are applied that approximately the lipid double layer membrane is formed. This means that approximately two layers of lipids are generated. It is preferable that the lipid double layer membrane is free floating on the base liquid surface 14. Also any of the layers which are later described may have such a concentration that the generated membrane is free floating on the base liquid surface 14.

The thickness of the lipid double layer 15 may be in the range between 4 to 10 nm. Further preferable thicknesses of each of the first and second hydrophilic layers are 5, 8 nm. Said values may constitute an upper and/or lower border of a thickness range.

On top of this lipid double layer membrane 15, also with an electro-spraying method, there is deposited a first hydrophilic layer 16.

For this hydrophilic layer, any hydrophilic molecule or molecules may be used. However, it is beneficial that these molecules are not volatile. These hydrophilic molecules may be applied via electro-spraying, wherein droplets are generated containing a volatile solvent with inevitable impurities, wherein in the volatile solvent, the hydrophilic molecule is dissolved. As hydrophilic molecule, there may be used glycerol.

For electro-spraying, there may be used a flow rate in the emitter between 20 nL/min to 100 nL/min. The emitted solution, wherein the respective molecules/substance (lipid species, protein species, hydrophilic species) are/is dissolved in the volatile solvent may have/has a molecule/substance concentration between 0.05 pmol/µl and 100 pmol/µl. Further preferable concentrations are 1 pmol/µl, 10 pmol/µl, 50 pmol/µl. Said values may constitute an upper and/or lower border of the aforementioned range. When e.g. the solution of a concentration is 1 pmol/µl, each droplet carries an average of only one molecule of the substrate., the remainder of the droplet is the volatile solvent and inevitable impurities.

For electro-spraying, in particular, an ethanol solution containing 33% of glycerol may be used.

The thickness of the sprayed first hydrophilic layer 16 may be in the range between 30 to 600 nm. Further preferable thicknesses of each of the first and second hydrophilic layers are 40, 200, 400 nm. Said values may constitute an upper and/or lower border of a thickness range.

After the application of the first hydrophilic layer 16 in a step which is defined in the claims as step a), there is applied via an electro-spraying a first lipid layer 17 (see Figure 4.2) onto the first hydrophilic layer 16. As the first hydrophilic layer 16 has hydrophilic abilities, the lipid molecules 1 are arranged with the hydrophilic head portion 5 dissolved in the first hydrophilic layer 16 and their hydrophobic tail portion 6 extends away from the first hydrophilic layer 16.

The amount of lipid material applied to the surface of the first hydrophilic layer in step a) is such that only approximately one first lipid layer 17 and not a double layer is formed.

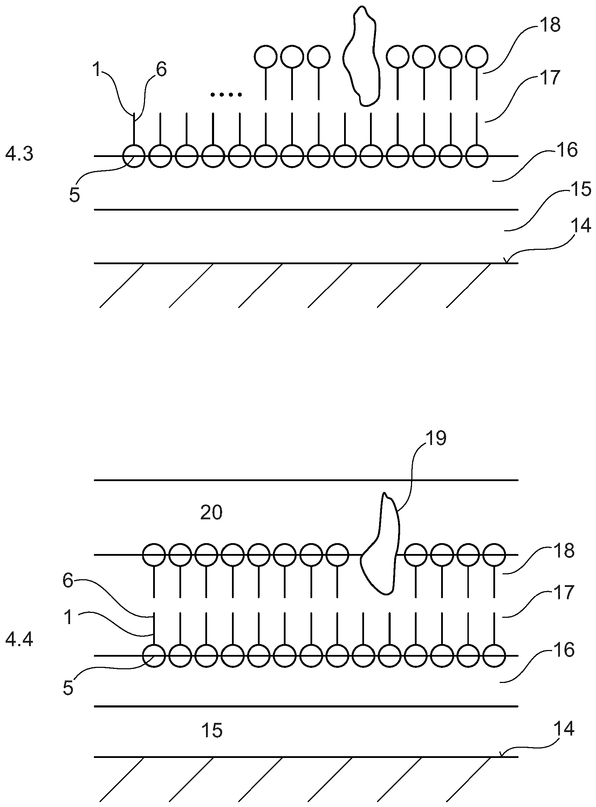

Thereafter, there is provided also via electro-spraying a mixture of protein and the further amount of lipid which makes up the first lipid layer 18. Thereby, as shown in Figs. 4.3 and 4.4, there is formed the functionalized lipid bi-layer membrane having a protein molecule 19 incorporated therein.

In the specific example, it is shown that the protein molecule is embedded in the second lipid layer 18, however, depending on the method and the protein configuration, the molecules may be arranged so that the protein 19 extends through the functionalized lipid bi-layer membrane such that the ends thereof extend into the respective first or second hydrophilic layer.

In Fig. 4.4, there is shown the situation after the application of a second hydrophilic layer 20 which is also done with the electro-spraying method. The application of the second hydrophilic layer 20 is done in a corresponding way, as it is described in the above section for the first hydrophilic layer 16.

The thickness of the sprayed second hydrophilic layer 20 may be in the range between 30 to 600 nm. Further preferable thicknesses of each of the first and second hydrophilic layers are 40, 200, 400 nm. Said values may constitute an upper and/or lower border of a thickness range.

Throughout the application, the terms first, second, third etc. do not imply any specific order and are solely used for a better differentiation of the respective species. The first, second, third etc. species described therein may also be used for the same molecules for the respective species.

With the aforementioned configuration, which is explained with the help of the example in Figures 4.1 to 4.4, the second hydrophilic layer ensures that the generated functionalized lipid bi-layer membrane is not in contact with the surrounding atmosphere and, thus, the protein can be arranged more precisely and a flat functionalized lipid bi-layer can be generated.

In the following, there are described non-limiting examples of the materials and procedures which may be used. Said materials and procedures may be combined in any form with the features described in the claims and in the preceding description, and the extraction of single materials and procedures outlined below, is explicitly allowed.

### Example of container

A circular container is used in which the base liquid is stored on which the inventive membrane is generated. The diameter determines the size of the membrane to be synthesized. In some experiments the container had the following dimensions: height about 10 cm, diameter 3 cm. The container is filled with a buffer, e.g. water with a specific pH and salts which maintain the membrane proteins in its correct folding state and prevent its denaturation. Thus, the base liquid may also be determined as buffer solution forming the base liquid.

### Example of electrospray apparatus

An electrospray apparatus is operated in nano-electrospray mode with a flow rate between 20 nL/min and 100 nL/min. Nano-electrospray may be understood that the initially generated droplets have a diameter in the several hundred nm range. The consequence of this low flow rate is that the droplets are so small that for a solution with a substance concentration of 1 pmol/µl each droplet carries on the average only 1 molecule of the substance. The body of the droplet consists of volatile solvent. The initial droplets may be so small that mostly all solvent evaporates before the droplets reach the liquid surface and that the dried down residual solid or viscous particles are not too heavy when they hit the buffer surface in the container.

### Electro-sprayed solutions for forming the respective layers

The following solutions may be used:
- An ethanol solution of the bi-polar lipid which makes up the body of the lipid bi-layer and/or double layer. In the current experimental set-up mostly phosphatidylcholine in some cases mixed with cholesterol was used.
- A buffered solution of the membrane protein(s). In case of water-soluble proteins, this solution contains 25volume% glycerol. For non-water-soluble proteins, it contains 1 volume% detergent. E.g. octylglucoside may be used as detergent to keep the membrane protein in its natively folded state.
- An ethanol-glycerol solution with 33% glycerol.

### Examples of a method for obtaining the proteins which are to be embedded into the inventive membrane

In the following it is described a method how the respective proteins may be obtained, before they are used in the mixture of step b) defined in claim 1. Said proteins may also be determined as membrane proteins in the present application.

If membrane proteins are purified, they are dissolved with detergents. Membrane proteins have a hydrophobic part, which is the part of the protein that is embedded in the membrane. In the present case said hydrophobic part is located in the inventive membrane, predominantly in the hydrophobic part of the lipid molecules forming the bi-layer membrane.

In order to purify membrane proteins, which may be dissolved out of cellular membranes with the aid of detergents. Detergents assist in protecting the hydrophobic parts of the protein from water or a hydrophilic environment.

Therefore, the proteins which are used for embedding it into the inventive membrane may be derived from cellular membranes, which may be identified as cellular membrane starting material.

In order to reintegrate the proteins into membranes, the detergent is removed, for example, with aforementioned SM2 Biobeads or any other detergent adsorbing material.

The removal of the detergents in an aqueous solution may lead generally to the denaturation of the proteins. This is not the case, if lipids are present to take their place. Therefore, in the method step b) in claim 1 the mixture of the second lipid molecules with the proteins is used.

### Examples of specific method executed in the experiments carried out

Generally depending on the situation whether the protein requires detergents or not, the method for generating the inventive functionalized lipid bi-layer membrane may be a bit different. The characters I., II., a., b., c., 1., 2., 3. etc. used in the following do not necessarily correspond to the aforementioned steps a), b), c) .... The characters used in the following are only used for illustrative purpose and for a better differentiation of the different set ups and steps. For making a differentiation with respect to the aforementioned steps, it is used always a "." Instead of a ")" behind the respective character.

In particular, the following method was executed.
I. For proteins that are water-soluble:
   1. The container is filled with a buffer solution whose composition is chosen so that the protein maintains its folded state.
   2. The container is placed under the pulled glass capillary needle of a nano-electrospray apparatus. The distance between the end of the needle and surface is chosen so that the solvent from the sprayed solution can evaporate before the residual particle from the droplets reach the surface. In our experimental realization, this is in the order of 2-3 cm.
   3. A specific sequence of solutions is sprayed onto the buffer surface using the electrospray instrument, for example:
      a. an ethanol solution of a bi-polar lipid which makes up the body of the lipid bi-layer,
         - e.g. phosphatidylcholine sometimes mixed with cholesterol was used. The total quantity of the lipid sprayed onto the surface corresponds to the quantity required to form a continuous and complete lipid bi-layer covering the entire surface.
         This solution is incubated for a couple of hours at room temperature to allow enough time for the assembly of a lipid bi-layer on the surface. In he present experiments, the preparation was incubated overnight.
      b. For about 20 minutes, an ethanol/33vol% glycerol solution is sprayed to generate a hydrophilic closed layer of glycerol on the lipid bi-layer of a certain but small thickness.
      c. An ethanol solution of a bi-polar lipid eventually mixed with other small lipophilic molecules is sprayed which make up the body of a lipid bi-layer. The quantity of the lipids is only half of what was sprayed in step a. to generate a mono-layer of lipid molecules and not a closed bi-layer.
      d. Thereafter, the protein solution is sprayed. The solution contains the membrane protein(s) that will incorporate into the membrane. In addition, it contains the missing amount of lipid required to form together with the already sprayed amount of lipid of step c. and the protein(s) a closed lipid bi-layer. The solution contains 25vol% glycerol to protect the protein from denaturation either during the spraying process or after arrival on the surface and evaporation of its water content.
      e. The solution is incubated at room temperature for some time (between several hours and several days) to allow the self-assembly of a lipid bi-layer that contains the sprayed membrane protein(s).
II. For proteins that require detergents to be soluble in aqueous solutions:
   1. The container is filled with a buffer solution whose composition is chosen so that the protein maintains its folded state.
   2. Some buffer conditioned SM2-Biobeads are added to the solution. Their function is to absorb the detergent molecules. The SM2-Biobeads sink to the ground. In the experiments between 10 and 20 particles per container were e.g. used.
   3. The container is placed under the needle of a nano-electrospray apparatus. The distance between spray needle and surface is chosen so that the solvent from the sprayed solution can evaporate before the residual particle from the droplets hit the surface. In the experimental realization this may be in the order of 2 - 3 cm.
   4. A specific sequence of solutions is sprayed onto the buffer surface using the electrospray instrument, for example:
      a. An ethanol solution of a bi-polar lipid which makes up the body of the lipid bi-layer,
         - e.g. a phosphatidylcholine sometimes mixed with cholesterol is used. The total quantity of the lipid sprayed onto the surface corresponds to the quantity required to form a continuous and complete lipid bi-layer covering the entire surface.
         This solution is incubated for a couple of hours at room temperature to allow enough time for the assembly of a lipid bi-layer on the surface. In the experiments the preparation was e.g. incubated overnight.
      b. For about 20 minutes, an ethanol/33vol% glycerol solution is sprayed to generate a hydrophilic closed layer of glycerol on the lipid bi-layer of a certain but small thickness.
      c. An ethanol solution of a bi-polar lipid eventually mixed with other small lipophilic molecules is sprayed which make up the body of a lipid bi-layer. The quantity of the lipids is only half of what was sprayed in step a. to generate a mono-layer of lipid molecules and not a closed bi-layer.
      d. The protein-detergent solution is sprayed. The solution contains the membrane protein(s) that will incorporate into the membrane. In addition, it contains the missing amount of lipid required to form together with the already sprayed amount of lipid of step c. and the protein(s) a closed lipid bi-layer. The detergent keeps the protein from denaturation during the spraying process and after arrival on the surface
      e. For about 20 minutes, an ethanol/33vol% glycerol solution is sprayed to generate a hydrophilic closed layer of glycerol on the assembly of a certain but small thickness.
      f. The solution is incubated at room temperature or at 37°C for some time (3 and 7 days or even longer) to allow a slow removal of the detergent by absorption to the SM2-Biobeads on the bottom of the container. The detergent molecules which have been adsorbed on the the protein(s) are replaced by lipids and the inventive membrane with the membrane proteins is formed.

### Further Explanations concerning the Examples and the technical effect

There may be sprayed on such a mono-layer of lipid molecules a mixture of detergentencapsulated protein and lipids. Said lipids replace the detergents and thus the inventive functionalized bi-layer membrane is generated.

In addition, there may be added hydrophilic material e.g. glycerol, which does not evaporate, so that the molecules which are deposited on the surface can diffuse thereon and arrange themselves to form the functionalized bi-layer membrane.

In addition, some SM-2 Biobeads or any other detergent-adsorbing material may be added such that that this material is located under the mono-layer of lipids. This detergent-adsorbing material may adsorb the detergent molecules which are set free from the detergentencapsulated proteins.

The proteins and lipids which are provided in the steps a) and b) in claim 1 usually cannot not pass through the lipid mono-layer.

If this assembly is stored e.g. over days the surface no longer contains any detergents.

The place of the detergent which where adsorbed to the proteins is taken by the freely available lipids. The proteins and the remaining lipid molecules organize themselves, wherein the lipid mono-layer (first lipid layer) gives them the organizational direction. Thus, the inventive functionalized lipid bi-layer membrane is formed.

### Reference signs list

- 1, 2: Lipid molecules
- 3: First layer
- 4: Second layer
- 5: Hydrophilic head portion
- 6: Hydrophobic tail portion
- 7: Protein
- 7a: Embbedded proteins
- 7b: Canal proteins
- 7c: Protein helix
- 8: Emitter
- 9: Pinhole aperture
- 10: Base liquid
- 11: Container
- 12: Layer
- 13: Droplet
- 14: Base liquid surface
- 15: Lipid double layer
- 16: First hydrophilic layer
- 17: First lipid layer
- 18: Second lipid layer
- 19: Protein
- 20: First hydrophilic layer

## Claims

1. Method for preparation of a bioactive lipid membrane, comprising the following steps:
a) Applying first lipid molecules (1) to form a first lipid layer (17) on a liquid surface (14) by electro-spraying,
b) applying a mixture of second lipid molecules (2) and protein molecules (19) by electro-spraying so as to form a functionalized lipid bi-layer membrane having protein molecules integrated therein, and
c) applying a second hydrophilic layer (20) to the lipid bi-layer membrane formed in step b).

2. The method according to claim 1, wherein prior to step a), a further step ii) of applying a first hydrophilic layer (16) to the liquid surface (14) is carried out.

3. The method according to claim 1 or 2, wherein for generating the first and/or second hydrophilic layer (16, 20), glycerol dissolved in a volatile solvent is used.

4. The method according to claim 2, wherein prior to step ii), a further step i) of applying a lipid double layer membrane (15) to the liquid surface (14) by electro-spraying of third protein molecules is carried out.

5. The method according to any of the foregoing claims, wherein the second hydrophilic layer (20) in step c) and/or the first hydrophilic layer (16) in step ii) is/are applied by means of an electro-spraying.

6. The method according to any of the foregoing claims, wherein the first lipid molecules and/or the second lipid molecules are a mixture of lipid molecules and/or a pure lipid species, and/or wherein the first lipid molecules and the second lipid molecules have the same constitution.

7. The method according to any of the foregoing claims, wherein the electro-spraying is carried out such that a droplet (13) generated by the electro-spraying containing the respective molecule which is applied, contains less than 4 molecules, wherein the remainder is volatile solvent and inevitable impurities.

8. The method according to claim 7, wherein the electro-spraying is carried out such that the volatile solvent contained in the droplet (13) is substantially evaporated when the molecule which is applied reaches the surface on which it is deposited.

9. The method according to any of the foregoing claims, wherein the electro-spraying is carried out such that a distance between a nozzle (8) of an electro-spraying apparatus, with which the electro-spraying is carried out, and the surface (14) on which the molecule is deposited is between 1 and 5 cm.

10. The method according to any of the foregoing claims, wherein after step c) has been carried out, the generated sample is stored between 1 hour and 14 days at room temperature.

11. The method according to any of the foregoing claims, wherein the mixture of second lipid molecules and protein molecules applied in step b) further contains a detergent.

12. The method according to any of the foregoing claims, wherein there is added to a base liquid (10) which provides the liquid surface (14) in step a), in a further step iii) a detergent adsorbing material.

13. The method according to any of the foregoing claims, wherein the functionalized lipid bilayer membrane is produced such that it is free floating on the surface of the base liquid.

14. The method according to any of the foregoing claims, wherein the functionalized lipid bilayer membrane is produced such that is has a surface area of more than 7 cm².

15. The method according to any of the foregoing claims, wherein an electric and/or magnetic field is applied to the container in which the liquid is stored during and/or after the functionalized bi-layer membrane is thereon generated.

## Patentansprüche

1. Verfahren zur Herstellung einer bioaktiven Lipidmembran, umfassend die folgenden Schritte:
a) Aufbringen von ersten Lipidmolekülen (1) zur Bildung einer ersten Lipidschicht (17) auf eine Flüssigkeitsoberfläche (14) durch Elektrosprühen,
b) Aufbringen eines Gemischs aus zweiten Lipidmolekülen (2) und Proteinmolekülen (19) durch Elektrosprühen, um eine funktionalisierte Lipid-Zweischichtmembran mit darin integrierten Proteinmolekülen zu bilden, und
c) Aufbringen einer zweiten hydrophilen Schicht (20) auf die in Schritt b) gebildete Lipid-Zweischichtmembran.

2. Verfahren nach Anspruch 1, wobei vor Schritt a) ein weiterer Schritt ii) des Aufbringens einer ersten hydrophilen Schicht (16) auf die Flüssigkeitsoberfläche (14) ausgeführt wird.

3. Verfahren nach Anspruch 1 oder 2, wobei zur Erzeugung der ersten und/oder zweiten hydrophilen Schicht (16, 20) Glycerin, gelöst in einem flüchtigen Lösungsmittel, verwendet wird.

4. Verfahren nach Anspruch 2, wobei vor Schritt ii) ein weiterer Schritt i) des Aufbringens einer Lipid-Doppelschichtmembran (15) auf die Flüssigkeitsoberfläche (14) durch Elektrosprühen von dritten Proteinmolekülen ausgeführt wird.

5. Verfahren nach einem der vorhergehenden Ansprüche, wobei die zweite hydrophile Schicht (20) in Schritt c) und/oder die erste hydrophile Schicht (16) in Schritt ii) durch Elektrosprühen aufgebracht wird/werden.

6. Verfahren nach einem der vorhergehenden Ansprüche, wobei es sich bei den ersten Lipidmolekülen und/oder zweiten Lipidmolekülen um ein Gemisch aus Lipidmolekülen und/oder eine reine Lipidspezies handelt, und/oder wobei die ersten Lipidmoleküle und die zweiten Lipidmoleküle die gleiche Beschaffenheit aufweisen.

7. Verfahren nach einem der vorhergehenden Ansprüche, wobei das Elektrosprühen so ausgeführt wird, dass ein durch das Elektrosprühen erzeugtes Tröpfchen (13), welches das jeweilige Molekül enthält, das aufgetragen wird, weniger als 4 Moleküle enthält, wobei es sich bei dem Rest um flüchtiges Lösungsmittel und unvermeidbare Verunreinigungen handelt.

8. Verfahren nach Anspruch 7, wobei das Elektrosprühen so ausgeführt wird, dass das in dem Tröpfchen (13) enthaltene flüchtige Lösungsmittel im Wesentlichen verdampft ist, wenn das Molekül, das aufgebracht wird, die Oberfläche erreicht, auf der es abgeschieden wird.

9. Verfahren nach einem der vorhergehenden Ansprüche, wobei das Elektrosprühen so ausgeführt wird, dass ein Abstand zwischen einer Düse (8) einer Elektrosprühvorrichtung, mit der das Elektrosprühen ausgeführt wird, und der Oberfläche (14), auf der das Molekül abgeschieden wird, zwischen 1 und 5 cm beträgt.

10. Verfahren nach einem der vorhergehenden Ansprüche, wobei nach Ausführung von Schritt c) die erzeugte Probe zwischen 1 Stunde und 14 Tagen bei Raumtemperatur gelagert wird.

11. Verfahren nach einem der vorhergehenden Ansprüche, wobei das in Schritt b) aufgebrachte Gemisch aus zweiten Lipidmolekülen und Proteinmolekülen zusätzlich ein Detergens enthält.

12. Verfahren nach einem der vorhergehenden Ansprüche, wobei einer Basisflüssigkeit (10), welche die Flüssigkeitsoberfläche (14) in Schritt a) bereitstellt, in einem weiteren Schritt iii) ein Detergens adsorbierendes Material zugesetzt wird.

13. Verfahren nach einem der vorhergehenden Ansprüche, wobei die funktionalisierte Lipid-Zweischichtmembran so hergestellt wird, dass sie frei auf der Oberfläche der Basisflüssigkeit schwimmt.

14. Verfahren nach einem der vorhergehenden Ansprüche, wobei die funktionalisierte Lipid-Zweischichtmembran so hergestellt wird, dass sie einen Oberflächenbereich von mehr als 7 cm² hat.

15. Verfahren nach einem der vorhergehenden Ansprüche, wobei ein elektrisches und/oder magnetisches Feld an den Behälter angelegt wird, in dem die Flüssigkeit gelagert wird, und zwar während und/oder nachdem die funktionalisierte Zweischichtmembran darauf erzeugt wird bzw. wurde.

## Revendications

1. Procédé de préparation d'une membrane lipidique bioactive, comprenant les étapes suivantes :
a) application de premières molécules lipidiques (1) pour former une première couche de lipides (17) sur une surface de liquide (14) par électropulvérisation ;
b) application d'un mélange de secondes molécules lipidiques (2) et de molécules protéiques (19) par électropulvérisation de façon à former une membrane bicouche lipidique fonctionnalisée ayant des molécules protéiques intégrées à l'intérieur ; et
c) application d'une seconde couche hydrophile (20) à la membrane bicouche lipidique formée à l'étape b).

2. Procédé selon la revendication 1, dans lequel avant l'étape a), une étape supplémentaire ii) d'application d'un d'une première couche hydrophile (16) est réalisée sur la surface de liquide (14).

3. Procédé selon la revendication 1 ou 2, dans lequel on utilise du glycérol dissous dans un solvant volatil pour générer la première et/ou la seconde couche hydrophile (16, 20) .

4. Procédé selon la revendication 2, dans lequel avant l'étape ii), une étape supplémentaire i) d'application d'une membrane à double couche lipidique (15) est réalisée sur la surface de liquide (14) par électropulvérisation de troisièmes molécules protéiques.

5. Procédé selon l'une quelconque des revendications précédentes, dans lequel la seconde couche hydrophile (20) est appliquée à l'étape c) et/ou la première couche hydrophile (16) est appliquée à l'étape ii) au moyen d'une électropulvérisation.

6. Procédé selon l'une quelconque des revendications précédentes, dans lequel les premières molécules lipidiques et/ou les secondes molécules lipidiques sont un mélange de molécules lipidiques et/ou des variétés purement lipidiques et/ou dans lequel les premières molécules lipidiques et les secondes molécules lipidiques ont la même constitution.

7. Procédé selon l'une quelconque des revendications précédentes, dans lequel l'électropulvérisation est réalisée de telle sorte qu'une gouttelette (13) générée par l'électropulvérisation contenant la molécule respective qui est appliquée contient moins de 4 molécules, dans lequel le reste est un solvant volatil et des impuretés inévitables.

8. Procédé selon la revendication 7, dans lequel l'électropulvérisation est réalisée de telle sorte que le solvant volatil contenu dans la gouttelette (13) est sensiblement évaporé lorsque la molécule qui est appliquée atteint la surface sur laquelle elle est déposée.

9. Procédé selon l'une quelconque des revendications précédentes, dans lequel l'électropulvérisation est réalisée de telle sorte qu'une distance entre une buse (8) d'un appareil d'électropulvérisation avec lequel l'électropulvérisation est réalisée et la surface (14) sur laquelle la molécule est déposée est compris entre 1 et 5 cm.

10. Procédé selon l'une quelconque des revendications précédentes, dans lequel après réalisation de l'étape c), l'échantillon généré est stocké entre 1 heure et 14 jours à température ambiante.

11. Procédé selon l'une quelconque des revendications précédentes, dans lequel le mélange de secondes molécules lipidiques et de molécules protéiques appliqué à l'étape b) contient en outre un détergent.

12. Procédé selon l'une quelconque des revendications précédentes, dans lequel on ajoute un matériau absorbant le détergent à un liquide de base (10) qui fournit la surface de liquide (14) à l'étape a), dans une étape supplémentaire iii) .

13. Procédé selon l'une quelconque des revendications précédentes, dans lequel la membrane bicouche lipidique fonctionnalisée est produit de telle sorte qu'elle flotte librement sur la surface du liquide de base.

14. Procédé selon l'une quelconque des revendications précédentes, dans lequel la membrane bicouche lipidique fonctionnalisée est produite de telle sorte qu'elle ait une superficie supérieure à 7 cm².

15. Procédé selon l'une quelconque des revendications précédentes, dans lequel un champ électrique et/ou magnétique est appliqué au conteneur dans lequel le liquide est stocké pendant et/ou après la génération sur sa surface de la membrane bicouche fonctionnalisée.
